(19) Europäisches Patentamt / European Patent Office / Office européen des brevets

(11) **EP 4 342 767 B1**

(12) # EUROPEAN PATENT SPECIFICATION

(45) Date of publication and mention
of the grant of the patent:
**25.03.2026 Bulletin 2026/13**

(21) Application number: **23199019.3**

(22) Date of filing: **22.09.2023**

(51) International Patent Classification (IPC):
**B61L 27/60** *(2022.01)*

(52) Cooperative Patent Classification (CPC):
**B61L 27/60**

(54) **RAILWAY SIGNALLING DESIGN CHECKER**

ENTWURFSPRÜFER FÜR EISENBAHNSIGNALISIERUNG

DISPOSITIF DE VÉRIFICATION DE CONCEPTION DE SIGNALISATION FERROVIAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.09.2022 GB 202213890**

(43) Date of publication of application:
**27.03.2024 Bulletin 2024/13**

(73) Proprietor: **Siemens Mobility Limited
London, NW1 2PL (GB)**

(72) Inventor: **Lawrence, Andrew
Swindon, SN4 9DR (GB)**

(74) Representative: **Siemens Patent Attorneys
Postfach 22 16 34
80506 München (DE)**

(56) References cited:
**GB-A- 2 364 405**

• LUTEBERGET BJ�RNAR ET AL: "Efficient
verification of railway infrastructure designs
against standard regulations", FORMAL
METHODS IN SYSTEM DESIGN, KLUWER
ACADEMIC PUBLISHERS, DORDRECHT, NL, vol.
52, no. 1, 15 June 2017 (2017-06-15), pages 1 - 32,
XP036397260, ISSN: 0925-9856, [retrieved on
20170615], DOI: 10.1007/S10703-017-0281-Z

• LUTEBERGET BJ�RNAR ET AL: "Integrated
Formal Methods : 12th International Conference,
IFM 2016, Reykjavik, Iceland, June 1-5, 2016,
Proceedings", vol. 9681, 24 May 2016
(2016-05-24), pages 491 - 507, XP093029832,
Retrieved from the Internet <URL:http://link.
springer.com/content/pdf/10.1007/
978-3-319-33693-0.pdf> DOI: 10.1007/
978-3-319-33693-0 31

• BONACCHI ANDREA ET AL: "On the Validation
of an Interlocking System by Model-Checking",
11 September 2014, SAT 2015 18TH
INTERNATIONAL CONFERENCE, AUSTIN, TX,
USA, SEPTEMBER 24-27, 2015; [LECTURE
NOTES IN COMPUTER SCIENCE; LECT.NOTES
COMPUTER], SPRINGER, BERLIN,
HEIDELBERG, PAGE(S) 94 - 108, ISBN:
978-3-540-74549-5, XP047298010

• BANERJEE MADHUSREE ET AL: "A Tool-Chain
for the Verification of Geographic Scheme Data",
27 September 2023, RELIABILITY, SAFETY, AND
SECURITY OF RAILWAY SYSTEMS.
MODELLING, ANALYSIS, VERIFICATION, AND
CERTIFICATION; [LECTURE NOTES IN
COMPUTER SCIENCE; LECT.NOTES
COMPUTER], SPRINGER NATURE
SWITZERLAND, CHAM, PAGE(S) 211 - 224, ISBN:
978-3-031-43365-8, ISSN: 0302-9743,
XP047671415

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- HAXTHAUSEN ANNE E ET AL: "Applied Bounded Model Checking for Interlocking System Designs", 8 March 2014, ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE], SPRINGER INTERNATIONAL PUBLISHING, CHAM, PAGE(S) 205 - 220, ISBN: 978-3-030-90436-4, ISSN: 0302-9743, XP047651827

**EP 4 342 767 B1**

## Description

The present invention relates to a computer-implemented method of checking the design of a railway signalling scheme, in particular, an ETCS (European Train Control System) signalling scheme.

Railway signalling is used to direct rail traffic on railways to ensure that trains are kept clear of each other at all times. One commonly employed method is block signalling, where the railway is divided into sections known as "blocks", which may be fixed (where the limits of the blocks are fixed on the railway line) or moving (where the blocks are defined by the movement of a train). Fixed blocks, as the name implies, start and end at signals, with the length of the fixed block being determined to allow trains to operate as frequently as required. For example, in or near a railway station, the blocks may be very short (a few hundred metres), but on a railway line with little rail traffic the blocks may be many kilometres long. A train is only able to enter a particular fixed block when the signal controlling the entry to that block is set to proceed. This happens if either the block is empty, or an overlap has been set (a short distance extending beyond the signal at the exit of the block). The length of the fixed block, and therefore the distance between the signals at the entrance and exit of the fixed block is determined by taking a number of variables into account, including: line speed, train speed, line gradient, train breaking characteristics, length of line of sight of the train driver and the reaction time of the driver. For a moving block, the signalling system calculates a space around a train that no other train is permitted to enter. This is done using lineside signalling apparatus and determining the exact position of a train using a balise - a transponder placed on the railway track at a known location, as well as the speed of the train and its direction. Instructions are passed to each train rather than using the lineside signals, ensuring that each moving block is only occupied by one train at a time but in closer proximity in busy sections than possible with a fixed block.

The design of a railway signalling scheme therefore has to take into account that in any one section of track there could be a combination of signals fixed blocks and balises for moving blocks, as well as a variety of other line and lineside apparatus, including points, trackside heaters, treadles and controllers. The signalling scheme is typically a combination of various systems and software, each of which needs to be tested to verify the design of a railway signalling scheme. This, however, comes with several disadvantages. Firstly, the verification process is labour intensive, since not only may there be a large number of items to be verified even on a small section of track, but the verification must be as accurate as possible given the safety criticality of the design. This leads to a second disadvantage, in that the verification is done by trained operators, raising the possibility of human error. Despite training and certification, for a large railway signally design scheme an operator may have to run through hundreds of tests, which increases the likelihood of mistakes occurring. Finally, testing by hand is non-exhaustive, as it is typically not feasible to test all possible states of the software and signalling systems exhaustively. There is therefore a need for a way to be able to test railway signalling design schemes that minimises the risk of human error, increases the number of states tested and reduces the overall cost of design and testing.

The present invention aims to address these issues by providing, in a first aspect, a computer-implemented method of checking the design of a railway signalling scheme, comprising: a) accessing a track plan for a railway signalling scheme from storage device; b) rendering the track plan as an annotated graph, wherein the nodes of the graph represent the geographical position of individual railway assets on the railway; c) retrieving a set of rules and a set of axioms in first order logic defining the behaviour of the annotated graph and annotations on the graph from a storage device, wherein each rule corresponds to the correct geographical position of an individual railway asset; d) selecting an individual railway asset on the track plan and a corresponding subset of axioms; e) executing a bounded search of the graph using a pre-determined set of bounds to check whether a rule corresponding to the correct geographical position of the individual railway asset holds true with respect to the subset of axioms to determine whether the individual railway asset is in the correct geographical position; and f) outputting the result of the determination to a user; wherein the pre-determined set of bounds contains a variable bound k that is incrementally increased until the result of the rule check is known, such that the bounded search is carried out at a depth limited by the variable bound k.

Incrementing the variable bound k during the searches until a determination on a rule is found guarantees that the search is done at the most appropriate and shallowest depth. This effectively creates a breadth-first solver, rather than a depth-first solver, and minimises the time required for an accurate, automatic check of the railway signalling scheme design.

Preferably, the rule check is carried out by an automatic theorem prover as an SMT problem. Preferably, the bounding and incrementing of the search simulates a breadth-first search by the automatic theorem prover.

The maximum value of the variable bound k may be a configurable global integer value within the set of axioms. Alternatively, the maximum value of the variable bound k may be input by a user.

Preferably, the depth of the bounded search is proportional to the complexity of the individual railway asset.

Preferably, the method further comprises steps d) to f) for every individual railway asset in the track plan.

The present invention also provides, in a second aspect, a data processing system adapted to check the design of a railway signalling scheme, comprising: a storage device adapted to store the track plan and set of rules and a set of axioms in first order logic defining the behaviour of the graph and annotations on the graph, wherein each rule corresponds to the correct geographical position of an individual railway asset; a processor adapted to render the track plan as an annotated graph; retrieve the set of rules and the set of axioms from the storage device; select an individual railway asset on the track plan and subset of corresponding axioms; execute a bounded search of the annotated graph using a pre-determined set of bounds to check whether the rule corresponding to the correct geographical position of the individual railway asset holds true with respect to the subset of axioms determine whether the individual railway asset is in the correct geographical position; and output the result of the determination to a user; and
a display device to display the result output to the user; wherein the pre-determined set of bounds contains a variable bound k that is incrementally increased until the result of the rule check is known, such that the bounded search is carried out at a pre-determined depth.

Preferably, the data-processing system further comprises an input device adapted to receive a selection of an individual railway asset from a user.

The present invention yet further provides, in a third aspect, a computer program product comprises code, which, when executed on a computer, causes the computer to carry out the steps of the method outlined above.

The present invention will now be described by way of example only, and with reference to the accompanying drawings, in which

Figure 1 is an example of a track plan for a railway signalling scheme design;
Figure 2 is a schematic representation of the conversion of a scheme plan model of a section of railway track into an attributed graph model of the same section of railway track;
Figure 3 is a flowchart illustrating a method of checking a railway signalling scheme design in accordance with an embodiment of the present invention;
Figure 4 is a schematic representation of the incremental search of a graph using the variable bound k; and
Figure 5 is a schematic representation of a data-processing system adapted to carry out the checking of a railway signalling design in accordance with embodiments of the present invention.

The embodiments of the present invention use a graph representation approach to determine whether or not the possible states of a railway signalling design scheme meet a set of criteria designed to ensure that the resulting railway track layout is safe. The computer-implemented method of checking the design of a railway signalling scheme comprises a number of steps based upon creating an annotated graph from a track plan of a railway signalling scheme. The nodes of the annotated graph represent the geographical position of individual railway assets on the railway. Once the annotated graph is created, a set of rules and a set of axioms in first order logic defining the behaviour of the graph and annotations on the annotated graph are retrieved from a storage device. Each rule corresponds to the correct geographical position of an individual railway asset. To test the railway signalling design scheme, an individual railway asset on the track plan and a corresponding subset of axioms are selected. Then, a bounded search of the annotated graph is executed using a pre-determined set of bounds, to check whether a rule corresponding to the correct geographical position of the individual railway asset within the holds true with respect to the subset of axioms to determine whether the individual railway asset is in the correct geographical position. The result of this determination is output to a user. The pre-determined set of bounds contains a variable bound k that is incrementally increased until the result of the rule check is known, such that the bounded search is carried out at a depth limited by the variable bound k. The rule check is carried out by an automatic theorem prover as an SMT problem, and by bounding and incrementing the search, rather than a depth-first approach as is usual with an automatic theorem prover, a breadth-first search is simulated. The embodiments of the present invention are described in more detail below.

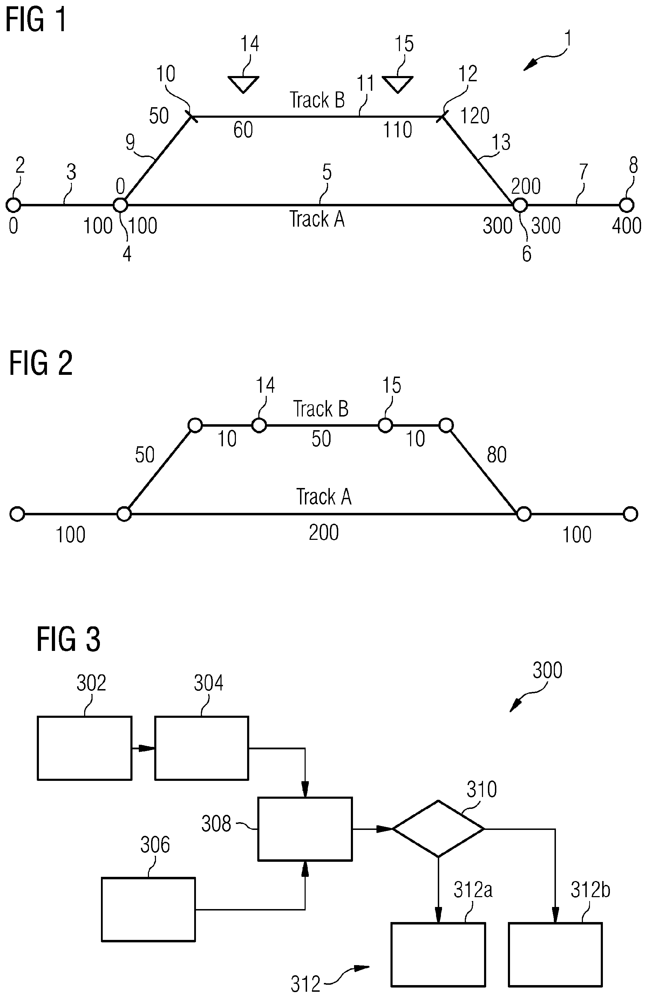

Figure 1 is an example of a track plan for a railway signalling scheme design. The track plan is configured as a scheme plan model , which comprises a number of inputs:

- Geographical data;
- Track data;
- Nodes (where railway tracks converge or diverge);
- Asset positions;
- Areas (track sections);
- Paths (train routes);
- Non-track objects (controllers, heaters, trackside cabling, stations, crossings); and
- Configuration values.

The track plan 1 shown in Figure 1 is a simple example illustrating a first railway track, Track A, and a second railway track, Track B, which diverges from Track A along a separate route before converging again. The numbering in italics along the route indicate distances between points of interest on Track A and Track B. Overall, Track A is 400m long, and Track B is 200m long.

Track A starts at a first node 2, and after a first track section 3 of 100m in length, Track B diverges at a second node 4, which is a set of points. Track A then continues for a second track length 5 of 300m in length, until Track B converges at a third node 6, which is also a set of points. Track A then terminates after a third track section 7 at a fourth node 8 100m from the third node 6. Track B starts at the second node 4, with a first track section 9 of 50m, before meeting a first track section boundary 10. A second track section 11 continues for a total of 170m to a second track section boundary 12, where finally after a third track section 13 having a length of 80m Track B converges with Track A at the third node 6.

Track B also contains two balises: a first balise 14 positioned at 10m from the first track section boundary 10 (or 60m from the second node 5), and a second balise 15 positioned at 50m from the first track section boundary 10 (or 110m from the second node 4). Within the scheme plan model model, the balises 14, 15 are modelled as a scheme plan model position based on the track identification and the distance from a fixed point (the first track boundary 10). The second track section 11 of Track B is modelled as a scheme plan model area in the scheme plan model model, defined using the positions of the first 10 and second 12 track section boundaries.

As part of the railway signalling scheme design checking method, the embodiments of the present invention convert the track plan, which is rendered as a scheme plan model, to a graph representation in an annotated graph. This is carried out by placing a graph node at every point of interest in the scheme plan model, and splitting the railway tracks into a number of edges that connect these graph nodes. Each edge has a track length associated with it. This process is illustrated schematically in Figure 2.

Figure 2 is a schematic representation of the conversion of a scheme plan model of a section of railway track into an annotated graph of the same section of railway track. This particular model is set up to check the position of the first 14 and second 15 balises in the overall signalling scheme design of Tracks A and B. A first graph node is placed at the first track section boundary 10:

```
type_name : track_section_boundary
boundary_id : T1_1
tracksection_id : T1
```

Next, a second graph node, representing the first balise 14, is placed at 10m from the first track section boundary 10:

```
type_name : balise
balise_id : 1
balise_group_id : 1
balise_type : reduced
```

A third graph node, representing the second balise 15, is placed at 50m from the first balise 14:

```
type_name : balise
balise_id : 2
balise_group_id : 1
balise_type : reduced
```

Lastly, a fourth graph node is placed at the second track section boundary 12, 10m from the second balise 15:

```
type_name : track_section_boundary
boundary_id : T1_2
tracksection_id : T1
```

This annotated graph is then used to check the design of the railway signalling scheme of Figure 1.

Figure 3 is a flowchart illustrating a method of checking a railway signalling scheme design in accordance with an embodiment of the present invention. The method 300 initially comprises the step 302 of accessing a track plan for a railway signalling scheme from storage device. This involves retrieving the scheme model of the track plan from the storage device, so that in a second step 304, the track plan can be rendered as an annotated graph. As outlined above, the nodes of the graph represent the geographical position of individual railway assets on the railway. Next, at step 306, a set of rules and a set of axioms in first order logic defining the behaviour of the annotated graph and annotations on the graph is retrieved from a storage device. Each rule corresponds to the correct geographical position of an individual railway asset. At step 308, an individual railway asset on the track plan and a corresponding subset of axioms are selected, for example, the section of Track B described above, and at step 310 a bounded search of the graph is executed. The bounded search of the annotated graph is executed using a pre-determined set of bounds, and checks whether a rule corresponding to the correct geographical position of the individual railway asset holds true with respect to the subset of axioms to determine whether the individual railway asset is in the correct geographical position. This is done using an automatic theorem prover as an SMT (Satisfiability Modulo Theories) problem. Finally, at step 312, the result of the determination is output to a user. The result may be either that the rule held true with respect to the subset of axioms and therefore the condition is satisfied (step 312a) or that the rule did not hold true, and the condition is not satisfied (step 312b). The failure is reported with a counter example based on the reasoning of the automatic theorem solver. Once the result for one railway asset is known, either amendments to the track plan may be made, or the method may be repeated for all other railway assets in the railway signalling design scheme.

The pre-determined set of bounds contains a variable bound $k$ that is incrementally increased until the result of the rule check is known, such that the bounded search is carried out at a depth limited by the variable bound $k$. For a simple railway asset, such as the comparing of positions of the first 15 and second 16 balises above where the corresponding topology of the graph is simple, the value of the variable bound $k$ is low and creates a bound that results in only a small section of the annotated graph being explored, and therefore the axiom checking is faster than if the entire annotated graph was explored. The topology of the annotated graph increases with the complexity of the railway asset being considered. For example, a set of points would be represented with a more complex topology than checking the distance between two balises, and therefore a larger value of the variable bound $k$ is required to enforce a larger search of the annotated graph. The depth of the bounded search is therefore proportional to the complexity of the individual railway asset. This therefore takes more time, but the overall trade-off between depth (a higher value of the variable bound $k$) and speed (a lower value of the variable bound $k$) can be exploited to reduce the time required overall to check the design of a railway signalling scheme. The exploration of the graph may be carried out using the following:

```
BOUNDED_GRAPH_CHECK(M : Model, A : Axioms, P : Property)

{

  result = UNKNOWN;

  k = 0;

  while(result ==  UNKNOWN && k <= MAX_BOUND)

  {

    result = check_rule(M,A,P,k);

    k = k+1;

  }

  return result;

}
```

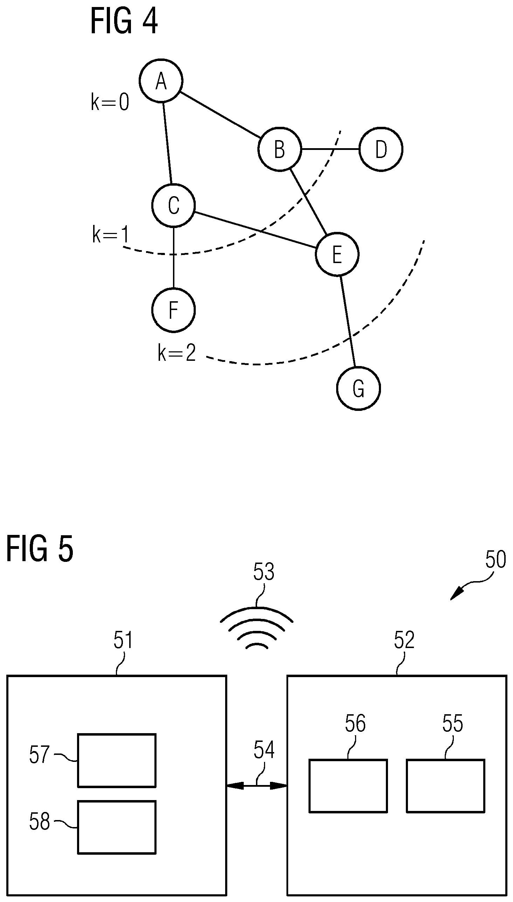

The value of the variable bound $k$ is increased incrementally until the result of the rule check is known. The maximum value of the variable bound $k$ is a configurable global integer value within the set of axioms, and may be input by a user. Figure 4 is a schematic representation of the incremental search of an annotated graph using the variable bound $k$. Initially, the source vertex information is used at $k = 0$, at the graph node A. Information used during the check at $k = 1$ involves the first-level nodes C and B. Information used during the check at $k = 2$ involves the second level nodes E and F, and so on. By bounding and incrementing the search, a simulated breadth-first search by the automatic theorem prover is achieved.

Design rules are captured using first order logic which allows for a computer to automatically reason about the rule. An example of a rule for a railway signalling scheme design is given below. One design requirement for a railway in the United Kingdom is that the minimum spacing between adjacent balise groups is constrained by a distance of ≥7.6m between adjacent end balises, on at each end of the two groups. This is represented by the design rule:

$$\forall b_1, b_2 \in Balises.\ balise\_group\_id(b_1) \neq balise\_group\_id(b_2) \rightarrow$$

$$adjacent(b_1, b_2) \rightarrow distance(b_1, b_2) \geq 7.6$$

The scheme plan model and design rule check is formulated as a Satisfiability Modulo Theories (SMT) problem and passed to the automatic theorem prover for solving.

Figure 5 is a schematic representation of a data-processing system adapted to carry out the checking of a railway signalling design in accordance with embodiments of the present invention. The data-processing system 50 is divided into two blocks: a cloud server 51 hosting storage and processing capabilities; and an editing terminal 52 provided on a local network and connected to the cloud server 51 via a communications network 53 and an API 54. The cloud server 51 hosts a storage device 55 adapted to store the track plan and set of rules and a set of axioms in first order logic defining the behaviour of the annotated graph and annotations on the graph. Each rule corresponds to the correct geographical position of an individual railway asset. The cloud server 51 also hosts a processor 56 adapted to render the track plan as an annotated graph; retrieve the set of rules and the set of axioms from the storage device and select an individual railway asset on the track plan and subset of corresponding axioms. The processor 56 also executes a bounded search of the annotated graph using a pre-determined set of bounds to check whether the rule corresponding to the correct geographical position of the individual railway asset holds true with respect to the subset of axioms determine whether the individual railway asset is in the correct geographical position. The processor 56 additionally outputs the result of the determination to a user via the API. The editing terminal 52 comprises a display device 57 to display the result output to the user, and may also comprise an input device 58 adapted to receive a selection of an individual railway asset from a user.

Using the embodiments of the present invention it is possible to check the states of a railway signalling scheme design automatically, thus reducing the likelihood of human error. By using variable bounds in the exploration of an annotated graph generated from a track plan of the railway signalling scheme design it is possible to reduce the amount of time taken to carry out checks on the overall design by balancing the time needed to check more complex graph topologies (representing more complex railway assets) requiring greater search depth with increased search speed from low bounds on search depth for simple checks (such as balise spacing). Incrementing the variable bound k during the searches until a determination on a rule is found guarantees that the search is done at the most appropriate and shallowest depth. Rather than having the automatic theorem solver therefore carry out depth-first searches on all individual railway assets, setting a variable bound effectively simulates the automatic theorem solver carrying out a breadth-first search.

**Claims**

1. Computer-implemented method of checking the design of a railway signalling scheme, comprising:

   a) accessing a track plan for a railway signalling scheme from storage device;
   b) rendering the track plan as an attributed graph, wherein the nodes of the attributed graph represent the geographical position of individual railway assets on the railway;
   c) retrieving a set of rules and a set of axioms in first order logic defining the behaviour of the graph and annotations on the attributed graph from a storage device, wherein each rule corresponds to the correct geographical position of an individual railway asset;
   d) selecting an individual railway asset on the track plan and a corresponding subset of axioms;
   e) executing a bounded search of the attributed graph using a pre-determined set of bounds to check whether a rule corresponding to the correct geographical position of the individual railway asset holds true with respect to the subset of axioms to determine whether the individual railway asset is in the correct geographical position; and
   f) outputting the result of the determination to a user;

   wherein the pre-determined set of bounds contains a variable bound $k$ that is incrementally increased until the result of the rule check is known, such that the bounded search is carried out at a depth limited by the variable bound $k$.

2. Computer-implemented method as claimed in claim 1, wherein the rule check is carried out by an automatic theorem prover as an SMT problem.

3. Computer-implemented method as claimed in claim 2, wherein the bounding and incrementing of the search simulates a breadth-first search by the automatic theorem prover.

4. Computer-implemented method as claimed in any preceding claim, wherein the maximum value of the variable bound $k$ is a configurable global integer value within the set of axioms.

5. Computer-implemented method as claimed in claim 4, wherein the maximum value of the variable bound $k$ is input by a user.

6. Computer-implemented method as claimed in claim 1, wherein the depth of the bounded search is proportional to the complexity of the individual railway asset.

7. Computer-implemented method as claimed in any preceding claim, further comprising repeating steps d) to f) for every individual railway asset in the track plan.

8. A data processing system adapted to check the design of a railway signalling scheme, comprising:

A storage device adapted to store the track plan and set of rules and a set of axioms in first order logic defining the behaviour of an annotated graph and annotations on the graph, wherein each rule corresponds to the correct geographical position of an individual railway asset;
a processor adapted to render the track plan as an attributed graph, wherein the nodes of the attributed graph represent the geographical position of individual railway assets on the railway;
retrieve the set of rules and the set of axioms from the storage device; select an individual railway asset on the track plan and subset of corresponding axioms; execute a bounded search of the annotated graph using a pre-determined set of bounds to check whether the rule corresponding to the correct geographical position of the individual railway asset holds true with respect to the subset of axioms determine whether the individual railway asset is in the correct geographical position; and output the result of the determination to a user; and
a display device to display the result output to the user;

wherein the pre-determined set of bounds contains a variable bound $k$ that is incrementally increased until the result of the rule check is known, such that the bounded search is carried out at a pre-determined depth.

9. Data processing system as claimed in claim 8, further comprising an input device adapted to receive a selection of an individual railway asset from a user.

10. A computer program product comprises code, which, when executed on a computer, causes the computer to carry out any of claims 1 to 7.

**Patentansprüche**

1. Computerimplementiertes Verfahren zum Prüfen des Entwurfs eines Eisenbahnsignalisierungsschemas, umfassend:

a) Aufrufen eines Gleisplans für ein Eisenbahnsignalisierungsschema von einer Speichervorrichtung;
b) Darstellen des Gleisplans als attributierter Graph, wobei die Knoten des attributierten Graphen die geografische Position einzelner Eisenbahneinrichtungen auf der Eisenbahn repräsentieren;
c) Abrufen eines Satzes von Regeln und eines Satzes von Axiomen in Prädikatenlogik erster Stufe, die das Verhalten des Graphen definieren, und Annotationen des attributierten Graphen von einem Speichermedium, wobei jede Regel der korrekten geografischen Position einer einzelnen Eisenbahneinrichtung entspricht;
d) Auswählen einer einzelnen Eisenbahneinrichtung im Gleisplan und eines entsprechenden Teilsatzes von Axiomen;
e) Ausführen einer begrenzten Suche im attributierten Graphen unter Verwendung eines vorbestimmten Satzes von Grenzen, um zu prüfen, ob eine Regel, die der korrekten geografischen Position der einzelnen Eisenbahneinrichtung entspricht, in Bezug auf den Teilsatz von Axiomen zutrifft, um zu bestimmen, ob sich die einzelne Eisenbahneinrichtung an der korrekten geografischen Position befindet; und
f) Ausgeben des Ergebnisses der Bestimmung an einen Benutzer; wobei der vorbestimmte Satz von Grenzen eine variable Grenze $k$ enthält, die schrittweise gesteigert wird, bis das Ergebnis der Regelprüfung bekannt ist, sodass die begrenzte Suche in einer durch die variable Grenze $k$ eingeschränkten Tiefe durchgeführt wird.

2. Computerimplementiertes Verfahren nach Anspruch 1, wobei die Regelprüfung durch einen automatischen Theorembeweiser als SMT-Problem durchgeführt wird.

3. Computerimplementiertes Verfahren nach Anspruch 2, wobei das Begrenzen und Steigern der Suche eine Breitensuche durch den automatischen Theorembeweiser simuliert.

4. Computerimplementiertes Verfahren nach einem der vorhergehenden Ansprüche, wobei der Maximalwert der variablen Grenze *k* ein konfigurierbarer globaler ganzzahliger Wert innerhalb des Satzes von Axiomen ist.

5. Computerimplementiertes Verfahren nach Anspruch 4, wobei der Maximalwert der variablen Grenze *k* von einem Benutzer eingegeben wird.

6. Computerimplementiertes Verfahren nach Anspruch 1, wobei die Tiefe der begrenzten Suche proportional zur Komplexität der einzelnen Eisenbahneinrichtung ist.

7. Computerimplementiertes Verfahren nach einem der vorhergehenden Ansprüche, ferner umfassend Wiederholen der Schritte d) bis f) für jede einzelne Eisenbahneinrichtung im Gleisplan.

8. Datenverarbeitungssystem, das dazu geeignet ist, den Entwurf eines Eisenbahnsignalisierungsschemas zu prüfen, umfassend:

ein Speichermedium, das dazu geeignet ist, den Gleisplan und den Satz von Regeln und einen Satz von Axiomen in Prädikatenlogik erster Stufe, die das Verhalten eines annotierten Graphen definieren, und Annotationen auf dem Graphen zu speichern, wobei jede Regel der korrekten geografischen Position einer einzelnen Eisenbahneinrichtung entspricht;
einen Prozessor, der dazu geeignet ist, den Gleisplan als attributierten Graphen darzustellen, wobei die Knoten des attributierten Graphen die geografische Position einzelner Eisenbahneinrichtungen repräsentieren; den Satz von Regeln und den Satz von Axiomen vom Speichermedium abzurufen; eine einzelne Eisenbahneinrichtung im Gleisplan und einen Teilsatz von entsprechenden Axiomen auszuwählen; eine begrenzte Suche im annotierten Graphen unter Verwendung eines vorbestimmten Satzes von Grenzen auszuführen, um zu prüfen, ob die Regel, die der korrekten geografischen Position der einzelnen Eisenbahneinrichtung entspricht, in Bezug auf den Teilsatz von Axiomen zutrifft, um zu bestimmen, ob sich die einzelne Eisenbahneinrichtung an der korrekten geografischen Position befindet; und das Ergebnis der Bestimmung an einen Benutzer auszugeben; und
eine Anzeigevorrichtung, um das an den Benutzer ausgegebene Ergebnis anzuzeigen;

wobei der vorbestimmte Satz von Grenzen eine variable Grenze k enthält, die schrittweise gesteigert wird, bis das Ergebnis der Regelprüfung bekannt ist, sodass die begrenzte Suche in einer vorbestimmten Tiefe durchgeführt wird.

9. Datenverarbeitungssystem nach Anspruch 8, ferner umfassend eine Eingabevorrichtung, die dazu geeignet ist, eine Auswahl einer einzelnen Eisenbahneinrichtung von einem Benutzer zu empfangen.

10. Computerprogrammprodukt, das Code umfasst, der bei Ausführung auf einem Computer den Computer veranlasst, einen der Ansprüche 1 bis 7 durchzuführen.

**Revendications**

1. Procédé mis en œuvre par ordinateur de vérification de la conception d'un système de signalisation ferroviaire, comprenant :

a) l'accès à un plan de voie pour un système de signalisation ferroviaire à partir d'un dispositif de stockage ;
b) la représentation du plan de voie sous forme de graphe attribué, dans lequel les nœuds du graphe attribué représentent la position géographique d'actifs ferroviaires individuels sur la voie ferrée ;
c) la récupération d'un ensemble de règles et d'un ensemble d'axiomes en logique de premier ordre définissant le comportement du graphe et d'annotations sur le graphe attribué à partir d'un dispositif de stockage, dans lequel chaque règle correspond à la position géographique correcte d'un actif ferroviaire individuel ;
d) la sélection d'un actif ferroviaire individuel sur le plan de voie et d'un sous-ensemble correspondant d'axiomes ;
e) l'exécution d'une recherche bornée du graphe attribué en utilisant un ensemble de bornes prédéterminées pour vérifier si une règle correspondant à la position géographique correcte de l'actif ferroviaire individuel est vraie par rapport au sous-ensemble d'axiomes pour déterminer si l'actif ferroviaire individuel se trouve dans la position géographique correcte ; et
f) la délivrance du résultat de la détermination à un utilisateur ;

dans lequel l'ensemble prédéterminé de bornes contient une borne variable *k* qui est augmentée de manière incrémentielle jusqu'à ce que le résultat de la vérification de la règle soit connu, de telle sorte que la recherche bornée est effectuée à une profondeur limitée par la borne variable $k$.

2. Procédé mis en œuvre par ordinateur selon la revendication 1, dans lequel la vérification des règles est effectuée par un démonstrateur de théorèmes automatique comme un problème SMT.

3. Procédé mis en œuvre par ordinateur selon la revendication 2, dans lequel le bornage et l'incrémentation de la recherche simulent une recherche en largeur d'abord par le démonstrateur de théorèmes automatique.

4. Procédé mis en œuvre par ordinateur selon l'une quelconque des revendications précédentes, dans lequel la valeur maximale de la borne variable $k$ est une valeur entière globale configurable dans l'ensemble d'axiomes.

5. Procédé mis en œuvre par ordinateur selon la revendication 4, dans lequel la valeur maximale de la borne variable $k$ est saisie par un utilisateur.

6. Procédé mis en œuvre par ordinateur selon la revendication 1, dans lequel la profondeur de la recherche bornée est proportionnelle à la complexité de l'actif ferroviaire individuel.

7. Procédé mis en œuvre par ordinateur selon l'une quelconque des revendications précédentes, comprenant en outre la répétition des étapes d) à f) pour chaque actif ferroviaire individuel dans le plan de voie.

8. Système de traitement de données adapté à la vérification de la conception d'un système de signalisation ferroviaire, comprenant :

un dispositif de stockage adapté pour stocker le plan de voie et le ensemble de règles et un ensemble d'axiomes en logique de premier ordre définissant le comportement d'un graphe annoté et des annotations sur le graphe, dans lequel chaque règle correspond à la position géographique correcte d'un actif ferroviaire individuel ;
un processeur adapté pour représenter le plan de voie sous forme d'un graphe annoté, dans lequel les nœuds du graphe attribué représentent la position géographique des actifs ferroviaires individuels sur la voie ferrée ;
récupérer l'ensemble de règles et l'ensemble d'axiomes depuis le dispositif de stockage ; sélectionner un actif ferroviaire individuel sur le plan de voie et un sous-ensemble d'axiomes correspondants ; exécuter une recherche bornée du graphe annoté à l'aide d'un ensemble prédéterminé de bornes pour vérifier si la règle correspondant à la position géographique correcte de l'actif ferroviaire individuel est vraie par rapport au sous-ensemble d'axiomes ; déterminer si l'actif ferroviaire individuel se trouve dans la position géographique correcte ; et délivrer le résultat de la détermination à l'utilisateur ; et
un dispositif d'affichage pour afficher le résultat délivré à l'utilisateur ;

dans lequel l'ensemble prédéterminé de bornes contient une borne variable $k$ qui est augmentée de manière incrémentielle jusqu'à ce que le résultat de la vérification de la règle soit connu, de telle sorte que la recherche bornée est effectuée à une profondeur prédéterminée.

9. Système de traitement de données selon la revendication 8, comprenant en outre un dispositif de saisie adapté pour recevoir une sélection d'un actif ferroviaire individuel de la part d'un utilisateur.

10. Produit-programme d'ordinateur comprenant un code qui, lorsqu'il est exécuté sur un ordinateur, amène l'ordinateur à réaliser l'une quelconque des revendications 1 à 7.

## FIG 1

## FIG 2

## FIG 3

FIG 4

FIG 5